# FASCICULE DE BREVET EUROPEEN

(11) **EP 1 041 834 B1**
(45) Date de publication et mention de la délivrance du brevet: **03.08.2005**
(21) Numéro de dépôt: 00460017.7
(22) Date de dépôt: 28.02.2000
(51) Int. Cl.: H04Q 7/32

(54) **Terminal de télécommunication à stockage de messages courts gérées par un opérateur et procédé correspondant**
Telekommunikationsterminal mit Speicherung von durch den Operator verwalteten Kurznachrichten und Verfahren dafür
Telecommunications terminal with operator managed short message storage and corresponding method

(30) Priorité: 01.04.1999 FR 9904296
(43) Date de publication de la demande: 04.10.2000
(73) Titulaire: Société Française du Radiotéléphone-SFR, 75008 Paris (FR)
(72) Inventeur: De Kermadec, Alain M., 75007 Paris (FR)
(74) Mandataire: Vidon, Patrice

(56) Documents cités:
- EP-A- 0 851 649
- WO-A-97/32439
- FR-A- 2 742 290

## Description

Le domaine de la présente invention est celui des télécommunications, notamment avec des terminaux téléphoniques mobiles.

On sait en effet que les opérateurs de systèmes de télécommunication souhaitent offrir de nombreux services complémentaires, au-delà du simple service de communication téléphonique. Il peut par exemple s'agir d'options ou de fonctions proposant différents services supplémentaires gérés par un opérateur, tels que des indications concernant le compte du possesseur du terminal et/ou un fournisseur de services (qui peut être l'opérateur), tels que la réservation d'une place de cinéma ou la diffusion d'informations thématiques.

Pour assurer ces différents services, il est nécessaire de transmettre et de gérer des données spécifiques dans les terminaux de télécommunication. Ces données émises par l'opérateur, sont appelées par la suite "données opérateur".

L'invention concerne en particulier le traitement de ces données opérateur, dans les terminaux de télécommunication.

Le terminal de télécommunication de l'invention peut notamment, mais non exclusivement, être un radiotéléphone (ou terminal mobile, ou ME pour "Mobile Equipment" en anglais selon la terminologie GSM pour "Global System for Mobile communications" en anglais), par exemple compatible avec un système de radiocommunication de type GSM, DCS 1800 (pour "Digital Cellular System 1800 MHz" en anglais), PCS 1900 (pour "Personal Communication System" en anglais), DECT (pour "Digital European Cordless Telecommunications" en anglais), ou encore UMTS (pour "Universal Mobile Telecommunication System" en anglais).

Les spécifications techniques de ce type de terminal lui impose d'être capable d'émettre et recevoir des messages de type alphanumérique, classiquement appelés messages courts (ou "SMS", pour "Short Message Service" en anglais).

L'une des applications de ces messages courts est de permettre à un utilisateur de communiquer avec un autre utilisateur. On parle alors de "messages courts utilisateur". Ces derniers l'informent par exemple qu'il a reçu un message vocal sur son répondeur.

Un autre application de ces messages courts est de permettre à l'opérateur de transmettre aux terminaux les données opérateurs précitées. On parle alors de "messages courts opérateur".

Les messages courts sont constitués d'un champ en-tête et d'un champ de donnée(s) alphanumérique(s), ou champ de texte.

On distingue généralement les classes suivantes de messages courts:
- classe 0 : messages courts simplement affichés fugitivement, mais non stockés ;
- classe 1 : messages courts stockés dans la mémoire du terminal de télécommunication ;
- classe 2 : messages courts stockés dans la mémoire d'un module d'identification d'abonné (ou carte SIM) vace lequel cooopère le terminal ;
- classe 3 : messages courts stockés dans la mémoire d'un périphérique (par exemple un micro-ordinateur portable connecté au terminal de télécommunication) ;
- classe indéterminée : messages courts n'ayant pas de destination de stockage prédéterminée.

Quelle que soit la mémoire concernée (celle du terminal de télécommunication, du module d'identification d'abonné ou du périphérique, le nombre d'emplacements est limité à dix ou vingt emplacements de messages courts.

Les messages courts reçus ou à émettre stockés dans la mémoire (liste de messages courts) peuvent être lus par exemple sur l'écran du terminal de télécommunication, par défilement (ou "scrolling" en anglais).

Le terminal comprend bien sûr des moyens de gestion, permettant à l'utilisateur d'effacer des messages courts, en partie ou en totalité. Généralement, l'utilisateur efface les messages courts après les avoir visualisés.

On discute maintenant des problèmes liés à la gestion de la mémoire de messages courts du module d'identification d'abonné. Il est clair que ces mêmes problèmes se posent pour la gestion des autres mémoires de messages courts.

Actuellement, la gestion de la mémoire de messages courts s'applique de la même façon aux messages courts utilisateur et aux messages courts opérateur.

Or, cette gestion unique pose des problèmes gênants pour l'opérateur. En effet, il est fréquent que l'utilisateur gère mal la mémoire de messages courts, notamment en ne supprimant pas régulièrement les messages courts devenus obsolètes. Ceci se traduit par un encombrement de la mémoire de messages courts et donc par l'impossibilité de recevoir de nouveaux messages courts. Si une telle impossibilité peut être peu gênante pour l'utilisateur, elle peut empêcher l'opérateur d'assurer le fonctionnement correct de certains services. Par exemple, l'opérateur ne peut plus avertir l'utilisateur par message court qu'il a reçu un message vocal sur son répondeur.

En outre, cette gestion unique peut conduire l'utilisateur à effacer prématurément des messages courts opérateur, avant leur traitement par le terminal ou le module d'identification d'abonné.

Une solution pourrait consister à stocker les messages courts opérateur dans une mémoire distincte de celle utilisée pour le stockage des messages courts utilisateur. Cependant, une telle solution est difficilement acceptable et ne peut être retenue, car elle ne répond pas aux normes actuelles, et sa mise en oeuvre serait complexe et coûteuse.

On connaît par ailleurs, à travers la demande de brevet français FR 2 742 290, un dispositif portable de stockage d'informations personnelles, pouvant être intégré dans un appareil portable de radiocommunication. Les informations reçues et stockées sont par exemple transmises dans des messages courts (SMS). Les messages courts reçus sont stockés dans des zones distinctes en fonction du type du message court.

La présente invention a notamment pour objectif de pallier ces différents inconvénients de l'état de la technique.

Plus précisément, l'un des objectifs de la présente invention est de fournir une technique permettant de faciliter et d'améliorer la gestion et le stockage des messages courts "opérateur".

Un autre objectif de l'invention est de fournir une telle technique permettant, à l'opérateur, de pouvoir acheminer, de façon certaine, ses messages courts opérateur.

Encore un autre objectif de l'invention est de fournir une telle technique permettant d'éviter la suppression de messages courts opérateur, avant leur traitement par les terminaux.

Un autre objectif de l'invention est de fournir une telle technique ne nécessitant aucune adaptation du terminal de télécommunication.

Un objectif de l'invention est de fournir une telle technique, qui soit compatible avec les terminaux de télécommunication actuels.

Encore un autre objectif de l'invention est de fournir une technique permettant d'optimiser l'allocation des ressources disponibles.

Ces différents objectifs, ainsi que d'autres qui apparaîtront par la suite, sont atteints, selon l'invention, à l'aide d'un terminal de télécommunication, comprenant des moyens de mémorisation de messages courts reçus et/ou à émettre, chacun desdits messages courts comprenant un champ en-tête et un champ de données, lesdits moyens de mémorisation comprenant N emplacements de stockage de messages courts, dans lequel
au moins un desdits emplacements de stockage est réservé au stockage de messages courts portant une adresse prédéterminée, fixée par l'opérateur mettant en oeuvre ledit terminal de télécommunication.

Le principe général de l'invention consiste donc à distinguer deux zones distinctes et cloisonnées au sein de la même mémoire, l'une pour le stockage des messages courts opérateur, et l'autre pour le stockage des messages courts utilisateur.

La réservation d'emplacements de stockage pour les messages courts opérateur permet, à l'opérateur, d'émettre ses messages courts opérateur sans risque d'encombrement de mémoire ou de conflit avec les messages courts utilisateur, voire d'effacement accidentel par l'utilisateur.

En effet, seul l'opérateur est en mesure de pouvoir intervenir sur le contenu de ces emplacements réservés, pour les modifier et/ou les mettre à jour.

Il convient de noter qu'on entend par opérateur non seulement l'opérateur du réseau de télécommunication, mais également, un éventuel fournisseur de service ayant passé un contrat avec l'opérateur.

Selon l'invention, ladite adresse prédéterminée est stockée en permanence dans la zone mémoire correspondant au champ en-tête du message court dudit emplacement de stockage réservé.

On sait que les moyens de gestion des moyens de mémorisation comprennent généralement une commande d'effacement complet du contenu de celle-ci. Cette opération d'effacement peut présenter des risques, et comme expliqué ci-dessus (et était donc une raison supplémentaire, pour l'homme du métier, de ne pas envisager la solution de l'invention). De tels risques sont supprimés, selon l'invention, par le rechargement de l'adresse dans la zone mémoire correspondant au champ en-tête aussitôt après ledit effacement. C'est ce rechargement de l'adresse qui permet à l'emplacement concerné de rester attribué au stockage d'un message court opérateur.

Bien sûr, parallèlement au rechargement de l'adresse, on peut envisager que les données associées au message court correspondant sont également rechargées dans la zone mémoire correspondant au champ de données aussitôt après l'effacement Ceci permet de conserver des messages courts opérateur non encore traités.

Dans le cas d'un rechargement portant uniquement sur l'adresse de l'emplacement de stockage réservé, l'opérateur peut décider d'envoyer à nouveau les messages courts opérateur non encore traités qui étaient stockés et qui ont été effacés.

Selon un mode de réalisation préférentiel de l'invention, le rechargement de ladite adresse est effectué depuis une mémoire tampon, dans laquelle ladite adresse a été transférée avant ledit effacement.

Il est intéressant de relever que le rechargement peut également concerner les données "opérateur" relatives à l'adresse rechargée.

Une telle mémoire tampon se situe avantageusement au sein du module d'identification d'abonné.

Selon un mode particulier de réalisation de l'invention, lesdits moyens de mémorisation comprennent au moins trois emplacements de stockage réservés au stockage de messages courts correspondant à au moins trois adresses prédéterminées.

Il est clair cependant que l'invention n'impose aucune contrainte quant au nombre d'emplacement(s) de stockage réservé(s) au stockage de message(s) court(s) "opérateur", dans la limite de la place disponible.

Dans ce mode particulier de réalisation, lesdites adresses prédéterminées correspondent respectivement à :
- des informations concernant un service de gestion du répondeur (assurant la notification notamment par messages courts opérateur de la présence de messages vocaux dans le répondeur).
- des informations correspondant à un message de téléchargement ;
- des informations concernant la consommation téléphonique de l'utilisateur. Avantageusement, au moins une desdites adresses prédéterminées est téléchargeable.

De cette manière, l'opérateur peut, à tout moment, modifier et/ou mettre à jour et/ou rajouter de nouvelle(s) adresse(s) prédéterminée(s), correspondant par exemple à de nouveaux services.

Dans un mode de réalisation préférentiel de l'invention, il s'agit d'un radiotéléphone d'un système de radiocommunication.

Par exemple, ledit système de radiocommunication appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

Cette liste de systèmes de radiocommunication n'est bien sûr pas exhaustive.

Dans un mode de réalisation préférentiel de l'invention, lesdits moyens de mémorisation et/ou ladite mémoire tampon sont au moins partiellement présents dans un support de données amovible destiné à être inséré dans un lecteur correspondant dudit terminal de télécommunication, et ledit support de données amovible est intégré au moins en partie dans un module d'identification d'abonné.

L'invention concerne également un procédé de gestion de moyens de mémorisation de messages courts reçus et/ou à émettre, mis en oeuvre par le terminal de télécommunication décrit précédemment. Un tel procédé comprend notamment une étape de réservation d'au moins un desdits emplacements de stockage au stockage de messages courts portant une adresse prédéterminée, fixée par l'opérateur mettant en oeuvre ledit terminal de télécommunication.

D'autres caractéristiques et avantages de l'invention apparaîtront à la lecture de la description suivante d'un mode de réalisation préférentiel de l'invention, donné à titre de simple exemple indicatif et non limitatif, et en référence aux dessins annexés, dans lesquels :
- les figures 1A et 1B illustrent des schémas simplifiés d'un mode de réalisation particulier d'un terminal de télécommunication et d'un module d'identification d'abonné selon l'invention, respectivement ;
- la figure 2 présente un organigramme simplifié d'un mode de réalisation particulier d'un procédé pouvant être mis en oeuvre par le terminal de télécommunication de la figure 1; et
- la figure 3 illustre, à travers un organigramme simplifié, un mode de fonctionnement pouvant être mis en oeuvre au sein du terminal de télécommunication de la figure 1.

L'invention concerne donc un terminal de télécommunication permettant notamment d'optimiser l'utilisation des messages courts comprenant des données correspondant à un(des) service(s) offert(s) par un opérateur, et/ou d'accéder directement à de telles données, afin de pouvoir les gérer de façon optimale.

Dans la suite de la présente description, on considère, comme terminal de télécommunication, le cas d'un radiotéléphone (ou terminal de télécommunication mobile) d'un système de radiocommunication de type GSM. Il est clair cependant que l'invention s'applique à tout type de terminal de télécommunication (fixe ou mobile). L'homme du métier saura aisément transposer l'invention notamment au cas d'un terminal de télécommunication de type fixe.

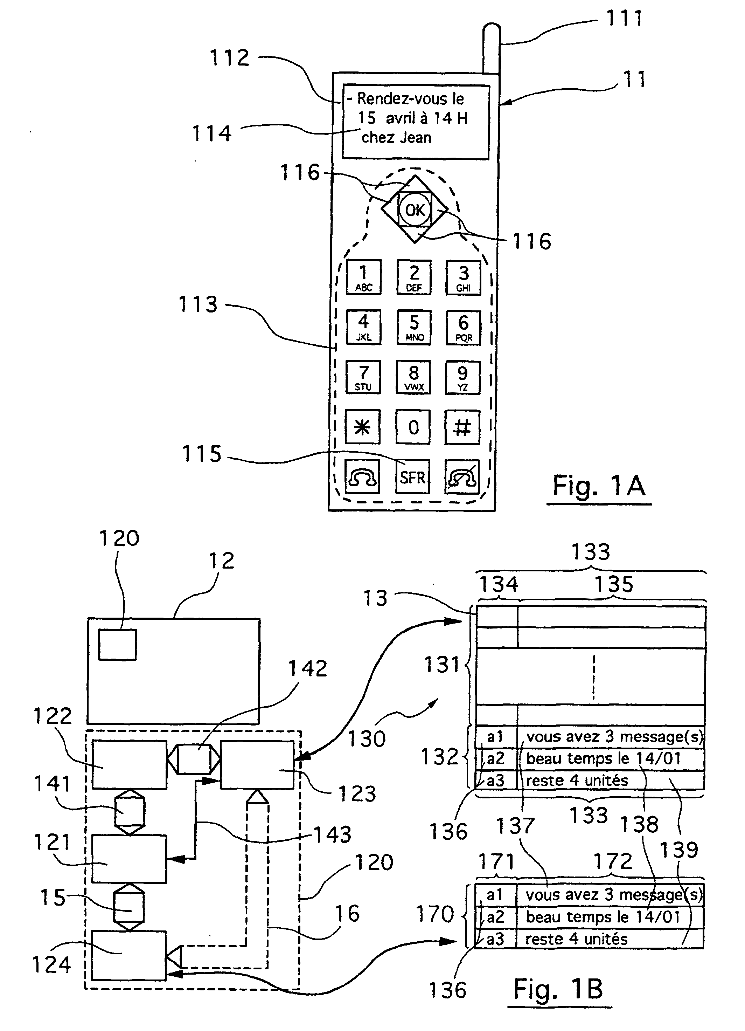

On présente maintenant, en relation avec le schéma simplifié de la figure 1, un mode de réalisation particulier d'un terminal 11 de télécommunication selon l'invention.

De façon classique, le terminal 11 de télécommunication comprend:
- une antenne 111 permettant d'émettre et/ou de recevoir des signaux véhiculant des informations émises via ou issues d'une station de base (non représentée) ;
- un écran 112 de visualisation permettant notamment de visualiser un(des) message(s) court(s) reçu(s) et/ou à émettre via la station de base ;
- un clavier 113 présentant une pluralité de touches permettant notamment de rédiger un message court à émettre, tel que le message 114 représenté ("rendez-vous prévu le 15 janvier à 14 heures chez Jean"), ainsi que de se déplacer, au moyen des touches 116, au sein d'une liste 13 de message(s) court(s) reçu(s) et/ou à émettre dans le but de le(s) visualiser à l'écran 112. De tels messages courts sont décrits dans la recommandation GSM 02.03 (insérée ici comme référence).

Le terminal 11 de télécommunication coopère avec un support amovible destiné à être inséré dans un lecteur correspondant du terminal 11 de télécommunication. Le support amovible de données est par exemple un module 12 d'identification d'abonné (ou SIM). Le module 12 d'identification d'abonné est une carte comportant un microprocesseur permettant de stocker, au sein de moyens 123 de mémorisation, certaines données dont, notamment, la liste 13 de messages courts reçus et/ou à émettre, et de traiter et gérer de telles données.

Les moyens 123 de mémorisation sont affectés aux messages courts reçus et/ou à émettre et comprennent un nombre N fixe d'emplacements 130 de stockage de message(s) court(s) égal par exemple à treize.

Le couple terminal 11 de télécommunication/module 12 d'identification d'abonné offre différentes fonctionnalités propres à l'abonné, au réseau et à la sécurité, telles que par exemple :
- mémoriser des numéros téléphoniques ;
- mémoriser des messages courts reçus et/ou à émettre ;
- mémoriser des opérateurs réseau préférentiels ;
- mémoriser une liste de numéros d'appel fixe à laquelle l'abonné porte ses préférences ;
- mémoriser la gestion du système de radiocommunication concerné ;
- mémoriser le numéro d'identification international de l'abonné selon les normes IMSI-TMSI ;
- mémoriser des données caractéristiques de la station de base associée à la cellule dans laquelle le terminal 11 de télécommunication se trouve ;
- authentifier l'abonné vis-à-vis du réseau ;
- authentifier, de façon passive, l'abonné par un code secret (ou PIN pour "Personal Identification Number" en anglais) ;
- ....

Ces différentes fonctionnalités sont gérées via une boîte à outils logicielle (ou "SIM Toolkit" en anglais) contrôlant le terminal 11 de télécommunication et le module 12 d'identification d'abonné en coopération. Pour mettre en oeuvre la boîte à outils, on tient compte notamment de la recommandation GSM 11.11 phase 2⁺, qui indique les mécanismes permettant l'interopérabilité entre le terminal 11 de télécommunication et le module 12 d'identification d'abonné.

Un utilisateur du terminal 11 de télécommunication peut notamment presser sur une touche 115 spécifique à un opérateur (ici représentée par la touche "SFR" (marque déposée)), pour accéder à un menu principal proposant notamment une option permettant une lecture de chaque message court reçu et/ou à émettre présent dans la liste 13. On rappelle que l'utilisateur peut également supprimer, à l'aide d'une deuxième option proposée à partir d'un menu, au moins certain(s) message(s) court(s) dont il a déjà pris connaissance (par leur visualisation à l'écran 112) et/ou qu'il ne souhaite plus voir apparaître (par exemple à l'écran 112). Une autre commande permet d'effacer simultanément et systématiquement l'ensemble des messages courts.

Chaque message court présente une taille limitée à un nombre de caractères s'élevant à quelques dizaines. Chaque message court comporte un champ en-tête portant l'adresse du message court et un champ de données comprenant les données utiles du message court correspondant. Chaque message court est stocké au sein d'un emplacement 133 de stockage. L'emplacement 133 de stockage d'un message court comprend d'une part une première zone référencée 134 prévue pour le stockage du champ en-tête du message court concerné, et d'autre part une seconde zone référencée 135 pour le stockage du champ de données du message court concerné.

Selon l'invention, au moins un des emplacements de stockage est réservé au stockage de messages courts portant une adresse 136 prédéterminée, fixée par l'opérateur mettant en oeuvre le terminal 11 de télécommunication. En d'autres termes, il est prévu de réserver une partie de la place en mémoire 130 destinée aux messages courts reçus et/ou à émettre issus ou destinés à un utilisateur, dits messages courts "utilisateur" pour conserver des messages courts particuliers, dits messages courts "opérateur", gérés uniquement par l'opérateur. De tels messages courts "opérateur" restent stockés au sein d'une zone 132 prédéterminée connue du module 12 d'identification d'abonné (et/ou du terminal 11 de télécommunication) et de l'opérateur. Par conséquent, seul l'opérateur est en mesure de retrouver l'emplacement de stockage réservé à un message court "opérateur" particulier. Il est alors possible, pour l'opérateur, d'accéder, en écriture (et éventuellement en lecture), aux données du champ de données d'un message court "opérateur" particulier. L'opérateur peut venir notamment modifier et/ou mettre à jour les données du message court "opérateur" pour le définir. L'utilisateur peut simplement venir prendre connaissance, en lecture, du contenu du champ des données de ce message court "opérateur" concerné sans pouvoir intervenir dans sa définition (et donc sur son écriture). L'utilisateur ne peut pas accéder, autant en écriture qu'en lecture, à l'emplacement de stockage comportant l'adresse 136 prédéterminée du message court "opérateur",.

La réservation d'emplacements de stockage dédiés au stockage de messages courts "opérateur" implique que les moyens 123 de mémorisation comportent une première zone 131 mémoire destinée à stocker des messages courts "utilisateur", et une seconde zone 132 mémoire dédiée au stockage de messages courts "opérateur".

Dans un souci de simplification, on suppose, dans la suite de la description, que plusieurs emplacements sont réservés aux messages courts "opérateur".

Les moyens 123 de mémorisation comprennent par exemple, au moins trois emplacements de stockage réservés au stockage de messages courts "opérateur" correspondant à au moins trois adresses 136 prédéterminées référencées "a1", " "a2" et "a3".

Les adresses 136 prédéterminées des messages courts "opérateur" sont stockées en permanence, dans la seconde zone 132 mémoire, au sein d'emplacements 134 de stockage, correspondant au champ en-tête du message court "opérateur". Les emplacements 134 de stockage comprennent par conséquent les champs en-tête des messages courts "opérateur", de façon à pouvoir identifier, à tout moment, le type de données comprises dans les emplacements de stockage de messages courts. Cette identification peut s'opérer notamment lors d'une recherche d'accès à des données "opérateur" (menée exclusivement par l'opérateur) pour les modifier et/ou les mettre à jour et/ou pour venir remplacer l'adresse prédéterminée par une nouvelle adresse prédéterminée (par exemple pour offrir un service de meilleure qualité).Quant aux données des champs de données des messages courts "opérateur", elles sont stockées au sein d'emplacements 135 de stockage prévus pour le stockage des champs de données des messages courts "opérateur".

Au moins une des adresses 136 prédéterminées est téléchargeable. Il est clair que c'est l'opérateur qui décide, en fonction de ses préférences et/ou des offreurs de service avec lesquels il a passé des contrats, des différents services à proposer à l'utilisateur du terminal 11 de télécommunication. L'opérateur peut, en effet, faire évoluer le nombre et la nature des messages courts "opérateur" en fonction de divers paramètres (informations propres au service offert par l'opérateur, langue utilisée, etc...).

Les adresses 136 prédéterminées des messages courts "opérateur" correspondent respectivement à :
- des informations 137 concernant un service de gestion du répondeur, telles que des messages relatifs au nombre de messages vocaux sur sa boîte vocale gérée par l'opérateur et dont il n'a pas encore pris connaissance ;
- des informations 138 correspondant à un message de téléchargement, telles que des messages relatifs à la météo ;
- des informations 139 concernant la consommation téléphonique de l'utilisateur, telles que le montant du crédit restant et/ou le montant du coût de la communication en cours.

La liste 13 des messages courts "utilisateur" reçus et/ou à émettre et des messages courts "opérateur" est stockée dans les mêmes moyens 123 de mémorisation de messages courts prévus au sein du module 12 d'identification d'abonné. Ces moyens 123 de mémorisation sont connectés, via une liaison 142, à des moyens 122 de comparaison d'adresses également intégrés au sein du module 12 d'identification d'abonné.

Les moyens 122 de comparaison d'adresses comparent, notamment lors de la réception d'un nouveau message court (par le terminal 11 de télécommunication), la nature de l'adresse comprise dans le champ en-tête du message court reçu avec celle(s) comprise(s) dans la zone 132 mémoire correspondant au champ en-tête des messages courts. Une telle comparaison permet de déterminer l'emplacement de stockage du message court reçu, au sein des moyens 123 de mémorisation des messages courts. De cette manière, s'il s'agit d'un message court "utilisateur" selon une première possibilité, le message court reçu (ne portant aucune des adresses 136 prédéterminées) est stocké au sein d'un emplacement de stockage de la première zone 131 mémoire. Selon une seconde possibilité, à savoir lorsque le message court reçu est muni (au sein de son champ en-tête) d'une des adresses 136 prédéterminées (identiques à l'une de celles figurant au sein de l'emplacement 134 de stockage de la seconde zone 132 mémoire), telle que l'adresse référencée "a1", "a2" ou "a3", alors le message court reçu est stocké au sein de l'emplacement de stockage correspondant de la seconde zone 132 mémoire (en écrasant éventuellement le message court "opérateur" qui y est déjà stocké). Afin de pouvoir commander les moyens 122 de comparaison d'adresses, des moyens 121 de traitement et de gestion des données y sont reliés, via une liaison 141.

Les moyens 121 de traitement et de gestion des données, constituant le centre de décision, traitent et gèrent notamment des données échangées via le lecteur du module 12 d'identification d'abonné avec le terminal 11 de télécommunication, et des données à transmettre et/ou à recevoir des différents moyens compris d'une part au sein du module 12 d'identification d'abonné, et d'autre part au sein du terminal 11 de télécommunication tels que les moyens 123 de mémorisation des messages courts. Lorsque les moyens 121 de traitement et de gestion des données reçoivent un message court via des moyens de transmission (non représentés) reliés au lecteur, les moyens 121 de traitement transmettent le message court reçu aux moyens 122 de comparaison d'adresses.

Antérieurement à l'émission d'une instruction d'effacement (commandé notamment par un utilisateur du terminal 11 de télécommunication) affectant l'ensemble du contenu des moyens 123 de mémorisation, les moyens 121 de traitement génèrent une instruction permettant le chargement de chaque adresse 136 prédéterminée (comprise dans le champ en-tête du message court "opérateur") et éventuellement des données 137, 138, 139 respectives (comprises dans les champs de données) dans une zone 170 mémoire prévue au sein d'une mémoire 124 tampon.

La mémoire 124 tampon est par exemple prévue au sein du module 12 d'identification d'abonné. Selon une première variante de réalisation de l'invention (non représentée), la mémoire tampon se situe au sein du terminal 11 de télécommunication. Selon une seconde variante de réalisation de l'invention (non représentée), la mémoire 124 tampon est incluse au sein d'un périphérique, tel que par exemple un micro-ordinateur portable connecté au terminal 11. Selon une troisième variante de réalisation de l'invention (non représentée), les emplacements de stockage des adresses 136 prédéterminées et éventuellement des données 137 à 139 "opérateur" sont répartis entre une mémoire tampon comprise dans le terminal 11 de télécommunication et une mémoire tampon comprise dans le module 12 d'identification d'abonné, et éventuellement une mémoire tampon incluse dans un périphérique (tel qu'un micro-ordinateur).

L'instruction permettant le chargement de chaque adresse 136 prédéterminée est issue des moyens 121 de traitement et de gestion des données et adressée, via une liaison 143, aux moyens 123 de mémorisation des messages courts. L'instruction de chargement permet de transférer chaque adresse 136 prédéterminée, ainsi qu'éventuellement les données 137, 138, 139 "opérateur" associées, depuis les moyens 123 de mémorisation vers la mémoire 124 tampon. Un tel transfert s'opère entre les moyens 123 de mémorisation et la mémoire 124 tampon, soit directement via la liaison 16, soit indirectement via les moyens 121 de traitement et de gestion des données et les moyens 122 de comparaison d'adresses, c'est-à-dire en empruntant les liaisons 142, 141 et 15 respectivement.

Suite à la réception d'une instruction d'effacement du contenu de l'ensemble des emplacements de stockage, chaque adresse 136 prédéterminée est rechargée dans la zone mémoire des moyens 123 de mémorisation correspondant notamment au champ en-tête des messages courts "opérateur". Optionnellement, les données "opérateur" sont également rechargées dans la zone 132 mémoire des moyens 123 de mémorisation correspondant au champ de données des messages courts "opérateur". Un tel rechargement permet donc de garder toujours en mémoire le contenu des messages court(s) malgré leur effacement (opéré précédemment). Pour effectuer un tel rechargement, chaque adresse 136 prédéterminée est transférée depuis la mémoire 124 tampon vers les moyens 123 de mémorisation. De même que pour le chargement dans la mémoire 124 tampon de chaque adresse 136 prédéterminée et éventuellement des données "opérateur" correspondantes, le transfert entre la mémoire 124 tampon et les moyens 123 de mémorisation s'opère, soit directement via la liaison 16, soit indirectement via les moyens 121 de traitement et de gestion des données et les moyens 122 de comparaison d'adresses, c'est-à-dire en empruntant les liaisons 15, 141 et 142 respectivement.

On comprend qu'une opération d'effacement du contenu de l'emplacement 132 de stockage réservé au sein des moyens 123 de mémorisation ne provoque donc pas la perte définitive ni des adresses 136 prédéterminées ni éventuellement des données 137 à 139 "opérateur" associées (puisque la mémoire 124 tampon comprend la zone 170 mémoire comportant une copie à l'identique de ces adresses 136 prédéterminées (et éventuellement des données 137 à 139 associées) qui peut restituer, au moment opportun, l'ensemble des messages courts "opérateur" aux moyens 123 de mémorisation). Cette zone 170 mémoire peut présenter les mêmes caractéristiques que celle des emplacements de stockage réservés aux messages courts traitant de données "opérateur" au sein des moyens 123 de mémorisation (à savoir comprendre une zone 171 mémoire correspondant au champ en-tête et une zone 172 mémoire correspondant au champ de données comportant donc une copie de l'adresse 136 prédéterminée et éventuellement une copie des données 137 à 139 "opérateur" associées respectivement).

La présente invention propose donc une architecture simple, performante et peu coûteuse pour réaliser un terminal 11 de télécommunication en coopération avec un module 12 d'identification d'abonné, qui permet notamment de traiter et gérer, de façon efficace, des données "opérateur".

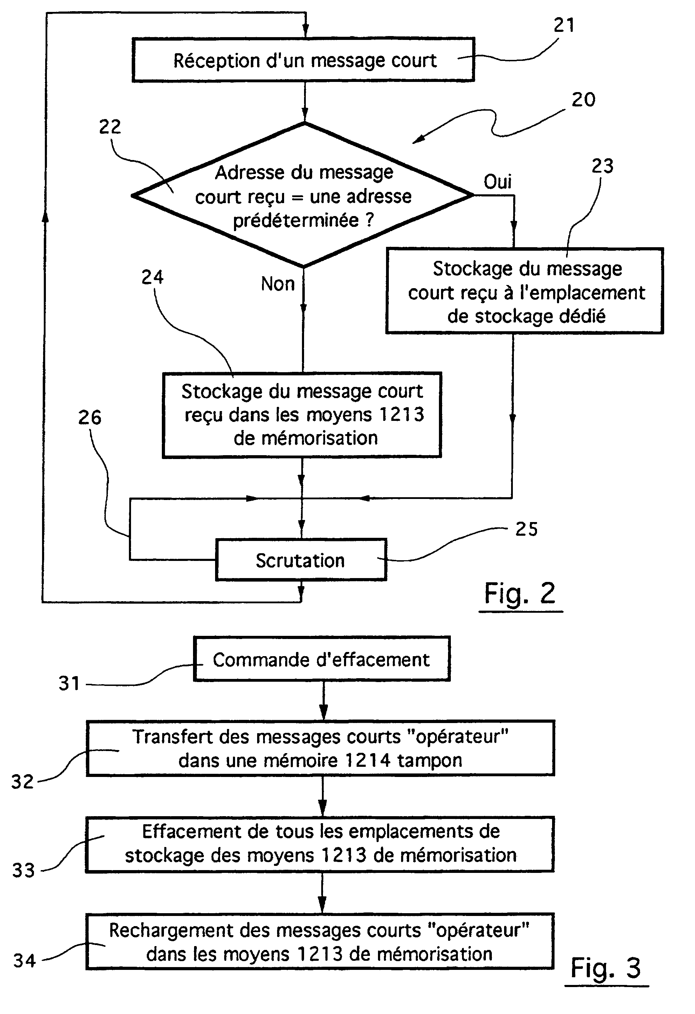

On décrit ci-après, en relation avec l'organigramme simplifié de la figure 2, un mode de réalisation particulier d'un procédé pouvant être mis en oeuvre par le terminal 11 de télécommunication.

De façon classique, un procédé 20 de gestion de moyens 123 de mémorisation de messages courts reçus et/ou à émettre par le terminal 11 de télécommunication (cf figure 1) comprend une étape 21 de réception d'un message court, transmis via une station de base, et destiné à un utilisateur du terminal 11 de télécommunication.

Selon une caractéristique essentielle de l'invention, on effectue une étape 22 d'analyse de l'adresse du message court reçu. Cette étape 22 d'analyse consiste notamment à comparer l'adresse comprise dans le champ en-tête du message court reçu avec chaque adresse prédéterminée de l'ensemble des adresses prédéterminées (comprises dans la zone 171 mémoire des emplacements de stockage réservés au stockage de messages courts "opérateur", au sein des moyens 123 de mémorisation de messages courts).

Dans l'affirmative, c'est-à-dire si l'adresse du message court reçu correspond à une adresse 136 prédéterminée, on (les moyens 121 de traitement et de gestion de données suite par exemple à une transmission d'un résultat positif sur la comparaison d'adresses entre l'adresse du message court reçu et une des adresses prédéterminées) décide de stocker 23 le message court reçu dans l'emplacement de stockage dédié au stockage du message court "opérateur" (c'est-à-dire portant une telle adresse au sein de la zone 132 mémoire (prévue intégrée dans les moyens 123 de mémorisation des messages courts)). Le message court reçu comprend notamment des données gérées exclusivement par l'opérateur concerné.

Dans le cas contraire, c'est-à-dire si l'adresse du message court reçu ne correspond pas à une adresse 136 prédéterminée, on (les moyens 121 de traitement et de gestion de données suite par exemple à une transmission d'un résultat négatif sur la comparaison d'adresses entre l'adresse du message court reçu et les adresses 136 prédéterminées) décide de stocker 24 le message court reçu au sein d'un emplacement de stockage de message reçu et/ou à émettre au sein de la zone 131 mémoire des moyens 123 de mémorisation des messages courts.

Lorsque le message court reçu a été stocké au sein des moyens 123 de mémorisation, on passe à une étape 25 de scrutation, pendant laquelle le terminal 11 de télécommunication (éventuellement piloté par les moyens 121 de traitement et de gestion des données) observent régulièrement (par exemple à chaque cycle d'une horloge de contrôle) si un nouveau message court a été reçu par le terminal 11 de télécommunication.

Si une nouvelle procédure de réception d'un message court est requise, on réitère les opérations 21 à 24 précitées, sinon le terminal 11 de télécommunication continue (26) d'effectuer l'étape 25 de scrutation précédente.

En relation avec l'organigramme simplifié de la figure 3, on explicite ci-dessous, succinctement, un mode de fonctionnement particulier pouvant être mis en oeuvre au sein du terminal de télécommunication.

De façon classique, un utilisateur du terminal 11 de télécommunication (cf figure 1) peut commander (31) un effacement notamment de l'ensemble des messages courts présents au sein des moyens 123 de mémorisation.

Lorsqu'une telle commande 31 d'effacement a été activée, une instruction de transfert des messages courts comprenant les champs en-tête comportant des adresses 136 prédéterminées et les champs de données comportant des données "opérateur" est transmise (32) aux moyens 123 de mémorisation des messages courts. De ce fait, une copie intégrale et fidèle des champs en-tête et éventuellement des champs de données des messages courts "opérateur" (de la zone 132 mémoire des moyens 123 de mémorisation) est immédiatement transmise vers la mémoire 124 tampon.

Une fois que le transfert d'une copie des messages courts "opérateur" a été effectué, un effacement 33 de tous les emplacements de stockage des moyens 123 de mémorisation (c'est-à-dire des zones 131 et 132 mémoire) est généré. Cet effacement 33 supprime l'ensemble des données comprises dans les champs en-tête et les champs de données des moyens 123 de mémorisation des messages courts.

Puis, on opère un rechargement 34 des messages courts "opérateur" depuis la mémoire 124 tampon vers les moyens 123 de mémorisation des messages courts, de sorte que les adresses 136 prédéterminées (et éventuellement les données 137 à 139 "opérateur" correspondantes) soient restituées aux champs en-tête et aux champs de données respectivement de la zone 132 mémoire.

Par conséquent, les messages courts gérés exclusivement par un opérateur ne sont supprimés que temporairement. L'utilisateur du terminal 11 de télécommunication peut visualiser les messages courts "opérateur" à l'écran 112, à tout moment, même s'il a commandé préalablement l'effacement de l'ensemble des messages courts (sans se rendre compte qu'ils ont fait l'objet d'une suppression même temporaire).

## Revendications

1. Terminal (11) de télécommunication, comprenant des moyens (123) de mémorisation de messages courts reçus et/ou à émettre, chacun desdits messages courts comprenant un champ en-tête et un champ de données, lesdits moyens (123) de mémorisation comprenant N emplacements (130) de stockage de messages courts,
**caractérisé en ce qu'**au moins un desdits emplacements de stockage est réservé au stockage de messages courts portant une adresse (136) prédéterminée, fixée par l'opérateur mettant en oeuvre ledit terminal (11) de télécommunication,
**en ce que** ladite adresse (136) prédéterminée est stockée en permanence dans la zone (132) mémoire correspondant au champ en-tête du message court dudit emplacement de stockage réservé,
et **en ce que**, lorsqu'une instruction d'effacement du contenu dudit emplacement de stockage réservé est reçue, ladite adresse (136) est rechargée dans ladite zone (132) mémoire correspondant au champ en-tête aussitôt après ledit effacement.

2. Terminal (11) de télécommunication selon la revendication 1, **caractérisé en ce que** le rechargement de ladite adresse (136) est effectué depuis une mémoire (124) tampon, dans laquelle ladite adresse (136) a été transférée avant ledit effacement.

3. Terminal (11) de télécommunication selon l'une quelconque des revendications 1 et 2, **caractérisé en ce que** lesdits moyens (123) de mémorisation comprennent au moins trois emplacements de stockage réservés au stockage de messages courts correspondant à au moins trois adresses (136) prédéterminées.

4. Terminal (11) de télécommunication selon la revendication 3, **caractérisé en ce que** lesdites adresses (136) prédéterminées correspondent respectivement à :
- des informations (137) concernant un service de gestion du répondeur ;
- des informations (138) correspondant à un message de téléchargement ;
- des informations (139) concernant la consommation téléphonique de l'utilisateur.

5. Terminal (11) de télécommunication selon l'une quelconque des revendications 1 à 4, **caractérisé en ce qu'**au moins une desdites adresses (136) prédéterminées est téléchargeable.

6. Terminal (11) de télécommunication selon l'une quelconque des revendications 1 à 5, **caractérisé en ce qu'**il s'agit d'un radiotéléphone (11) d'un système de radiocommunication.

7. Terminal (11) de télécommunication selon la revendication 6, **caractérisé en ce que** ledit système de radiocommunication appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

8. Terminal (11) de télécommunication selon l'une quelconque des revendications 1 à 7, **caractérisé en ce que** lesdits moyens (123) de mémorisation et/ou ladite mémoire (124) tampon sont au moins partiellement présents dans un support de données amovible destiné à être inséré dans un lecteur correspondant dudit terminal (11) de télécommunication,
et **en ce que** ledit support de données amovible est intégré au moins en partie dans un module (12) d'identification d'abonné.

9. Procédé (20) de gestion de moyens (123) de mémorisation de messages courts reçus et/ou à émettre par un terminal (11) de télécommunication, chacun desdits messages courts comprenant un champ en-tête et un champ de données, lesdits moyens (123) de mémorisation comprenant N emplacements (130) de stockage de messages courts,
**caractérisé en ce qu'**il comprend une étape (22) de réservation d'au moins un desdits emplacements de stockage au stockage de messages courts portant une adresse (136) prédéterminée, fixée par l'opérateur mettant en oeuvre ledit terminal (11) de télécommunication,
**en ce que** ladite adresse (136) prédéterminée est stockée en permanence dans la zone (132) mémoire correspondant au champ en-tête du message court dudit emplacement de stockage réservé,
et **en ce que**, lorsqu'une instruction d'effacement du contenu dudit emplacement de stockage réservé est reçue, ladite adresse (136) est rechargée dans ladite zone (132) mémoire correspondant au champ en-tête aussitôt après ledit effacement.

## Patentansprüche

1. Telekommunikationsterminal (11), das Mittel (123) zum Speichern von empfangenen und/oder zu sendenden Kurzmeldungen umfasst, wobei jede dieser Kurzmeldungen ein Kopffeld und ein Datenfeld aufweist und wobei die Mittel (123) zum Speichern N Speicherplätze (130) für Kurzmeldungen enthalten,
**dadurch gekennzeichnet, dass** mindestens einer dieser Speicherplätze für das Speichern von Kurzmeldungen reserviert ist, die eine vorgegebene Adresse (136) aufweisen, welche von dem das Telekommunikationsterminal (11) einsetzenden Benutzer festgelegt wird und,
dass diese vorgegebene Adresse (136) ständig in der dem Kopffeld der Kurzmeldung des erwähnten reservierten Speicherplatzes entsprechenden Speicherzone (132) gespeichert wird und,
dass bei Empfang einer Anweisung zum Löschen des Inhaltes dieses reservierten Speicherbereiches die besagte Adresse (136) unmittelbar nach dem Löschen in der dem Kopffeld entsprechenden Speicherzone (132) wieder geladen wird.

2. Telekommunikationsterminal (11) nach Anspruch 1, **dadurch gekennzeichnet, dass** das erneute Laden der Adresse (136) aus einem Pufferspeicher (124) erfolgt, in dem diese Adresse (136) vor dem Löschen umgesetzt wurde.

3. Telekommunikationsterminal (11) nach einem der Ansprüche 1 oder 2, **dadurch gekennzeichnet, dass** die Speichermittel (123) mindestens drei Speicherplätze umfassen, die zum Speichern von mindestens drei vorgegebenen Adressen (136) entsprechenden Kurzmeldungen reserviert sind.

4. Telekommunikationsterminal (11) nach Anspruch 3, **dadurch gekennzeichnet, dass** die vorgegebenen Adressen (136) jeweils dem Folgenden entsprechen:
- Informationen (137), die einer Verwaltungsdienstleistung des Beantworters betreffen;
- Informationen (138), die einer Lademeldung entsprechen;
- Informationen (139), welche dem Verbrauch an Telefoneinheiten des Benutzers entsprechen.

5. Telekommunikationsterminal (11) nach einem der Ansprüche 1 bis 4, **dadurch gekennzeichnet, dass** mindestens eine der vorgegebenen Adressen (136) herunter geladen werden kann.

6. Telekommunikationsterminal (11) nach einem der Ansprüche 1 bis 5, **dadurch gekennzeichnet, dass** es sich um ein Funktelefon (11) eines Funkkommunikationssystems handelt.

7. Telekommunikationsterminal (11) nach Anspruch 6, **dadurch gekennzeichnet, dass** das Funkkommunikationssystem zu der folgendes umfassenden Gruppe gehört:
- Funkkommunikationssysteme des Typs GSM;
- Funkkommunikationssysteme des Typs DCS 1800;
- Funkkommunikationssysteme des Typs PCS 1900;
- Funkkommunikationssysteme des Typs UMTS;
- Funkkommunikationssysteme des Typs DECT.

8. Telekommunikationsterminal (11) nach einem der Ansprüche 1 bis 7, **dadurch gekennzeichnet, dass** die Speichermittel (123) und/oder der Pufferspeicher (124) zumindest teilweise in einem herausnehmbaren Datenträger vorhanden sind, der in ein entsprechendes Lesegerät des Telekommunikationsterminals (11) eingesteckt werden soll und,
dass dieser herausnehmbare Datenträger zumindest teilweise in ein Modul (12) zur Identifizierung des Teilnehmers integriert ist.

9. Verwaltungsverfahren (20) für Speichermittel (123) von Kurzmitteilungen, die von einem Telekommunikationsterminal (11) empfangen und/oder gesendet werden sollen, wobei jede dieser Kurzmeldungen ein Kopffeld und ein Datenfeld aufweist und wobei die Speichermittel (123) N Speicherplätze (130) für Kurzmeldungen umfassen,
**dadurch gekennzeichnet, dass** es einen Schritt (22) zum Reservieren von mindestens einem dieser Speicherplätze für das Speichern von Kurzmeldungen umfasst, die eine vorgegebene Adresse (136) aufweisen, welche von dem Betreiber festgelegt wird, der das Telekommunikationsterminal (11) einsetzt,
dass die vorgegebene Adresse (136) ständig in der dem Kopffeld der Kurzmeldung des besagten reservierten Speicherplatzes entsprechenden Speicherzone (132) gespeichert ist und,
dass bei Empfang einer Anweisung zum Löschen des Inhaltes dieses reservierten Speicherbereiches die besagte Adresse (136) unmittelbar nach dem Löschen in der dem Kopffeld entsprechenden Speicherzone (132) wieder geladen wird.

## Claims

1. Telecommunications terminal (11), including means (123) for storing short messages that are received and/or to be sent, each of the said short messages being made up of a header field and a data field, the said storage means (123) including N short message storage locations (130), **characterised in that** at least one of the said storage locations is reserved for storing short messages having a predetermined address (136) set by the operator controlling the said telecommunications terminal (11), and **in that** the said predetermined address (136) is stored permanently in the memory area (132) for the short message header field of the said reserved storage location, and **in that**, when an instruction for erasing the content of the said reserved storage location is received, the said address (136) is reloaded into the said memory area (132) for the header field immediately after the said erase operation.

2. Telecommunications terminal (11) according to Claim 1, **characterised in that** the said address (136) is reloaded from a buffer memory (124), into which the said address (136) was transferred before the said erase operation.

3. Telecommunications terminal (11) according to any one of Claims 1 and 2, **characterised in that** the said storage means (123) include at least three storage locations reserved for storing short messages, corresponding to at least three predetermined addresses (136).

4. Telecommunications terminal (11) according to Claim 3, **characterised in that** the said predetermined addresses (136) are respectively for:
- information (137) relating to an answering system management service;
- information (138) corresponding to a download alert message;
- information (139) concerning the user's telephone service usage.

5. Telecommunications terminal (11) according to any one of Claims 1 to 4, **characterised in that** at least one of the said predetermined addresses (136) is downloadable.

6. Telecommunications terminal (11) according to any one of Claims 1 to 5, **characterised in that** it is a mobile telephone (11) of a radiocommunication system.

7. Telecommunications terminal (11) according to Claim 6, **characterised in that** the said radiocommunication system belongs to the group including:
- GSM radiocommunication systems;
- DCS 1800 radiocommunication systems;
- PCS 1900 radiocommunication systems;
- UMTS radiocommunication systems;
- DECT radiocommunication systems.

8. Telecommunications terminal (11) according to any one of Claims 1 to 7, **characterised in that** the said storage means (123) and/or the said buffer memory (124) are at least partly present in a removable data medium intended to be inserted in a corresponding reader of the said telecommunications terminal (11), and **in that** the said removable data medium is at least partly integrated in a subscriber identity module (12).

9. Method (20) for managing means (123) for storing short messages that are received and/or to be sent by a telecommunications terminal (11), each of the said short messages being made up of a header field and a data field, the said storage means (123) including N short message storage locations (130), **characterised in that** the method includes a step (22) for reserving at least one of the said storage locations for storing short messages having a predetermined address (136) set by the operator controlling the said telecommunications terminal (11), and **in that** the said predetermined address (136) is stored permanently in the memory area (132) for the short message header field of the said reserved storage location, and **in that**, when an instruction for erasing the content of the said reserved storage location is received, the said address (136) is reloaded into the said memory area (132) for the header field immediately after the said erase operation.
